# EUROPEAN PATENT APPLICATION

(11) **EP 4 223 645 A1**
(43) Date of publication of application: **09.08.2023**
(21) Application number: 23154851.2
(22) Date of filing: 03.02.2023
(51) Int. Cl.: B64D 33/02, F02C 7/042, B64D 27/14

(54) **INLET ARRANGEMENT, A PROPULSION SYSTEM, AND AN AIRCRAFT**

(30) Priority: 08.02.2022 US 202217650318
(71) Applicant: Gulfstream Aerospace Corporation, Savannah, Georgia 31402 (US)
(72) Inventor: FREUND, Donald, Savannah, 31402 (US); MUZYCHKA, Derek, Savannah, 31402 (US); KLUTZKE, Douglas, Savannah, 31402 (US)
(74) Representative: LKGlobal UK Ltd.

(57) **Abstract**

An inlet arrangement for a propulsion system includes an actuator (64), a linkage (62) and an inlet assembly (32, 3). The inlet assembly (32, 3) includes (1) a lip (2, 35, 40), (2) a cowl (42) extending downstream from the lip (2, 35, 40), the cowl (42) defining an external surface (72, 74) of the inlet assembly (32, 3), (3) an inlet duct (44) extending downstream from the lip (2, 35, 40), the inlet duct (44) disposed radially inward of the cowl (42), and (4) a movable component associated with the lip (2, 35, 40), the cowl (42), or the inlet duct (44). An outer surface (72) of the inlet duct (44) and an inner surface (74) of the cowl (42) define a gap (76) therebetween. The linkage (62) is disposed in the gap (76) and coupled with the moveable component. The linkage (62) is configured to move within the gap (76) and to move the moveable component when the linkage (62) moves. The actuator (64) is coupled with the linkage (62) and moves the linkage (62) when the actuator (64) is actuated. The actuator (64) is mounted remotely from the inlet assembly (32, 3).

## Description

### TECHNICAL FIELD

The present invention relates generally to aircraft, and more particularly to an inlet arrangement for use with a propulsion system of an aircraft.

### BACKGROUND

Aircraft performance (e.g., maximum speed; rates of fuel consumption at cruise speed) is hampered by drag, among other factors. It is therefore desirable to reduce the amount of drag acting on an aircraft to the maximum extent possible. An aircraft's propulsion system can contribute significantly to the drag acting on the aircraft. The larger the propulsion system's frontal area is, the larger the amount of drag acting on the propulsion system will be. Accordingly, it is desirable that the radial periphery of an aircraft's propulsion system be as small as possible. This principle applies with equal force to each of the discrete elements of the propulsion system that come into direct contact with the free stream, including, but not limited to the propulsion system's inlet assembly.

Some of the mechanisms that are necessary to perform the various functions of an inlet assembly have conventionally been mounted within the inlet assembly's structure and housed beneath the inlet assembly's cowl. The inlet assembly's cowl forms the outer mold line (OML) of the inlet assembly and the mechanisms referred to above (e.g., actuators) reside within the gap that is formed between an outer surface of the inlet assembly's inner pathway and an inner surface of the cowl. For example, inlet assemblies may include an actuator that is used to control the movement of a movable component associated with the inlet assembly, such as, but not limited to, a moveable strut that, in turn controls the movement of a deployable lip. Conventionally, this actuator has been mounted to the inlet assembly but is not visible during normal operation of the propulsion system because these mechanisms are covered by the cowl of the inlet assembly. For this reason, the cowl has conventionally been shaped and sized to accommodate these mechanisms. This causes the cowl to have a larger frontal area than it otherwise would have if there were no need to accommodate these mechanisms. As stated above, a larger frontal area has a negative impact on the drag imparted by the inlet assembly and, in turn, by the entire propulsion system on the aircraft. However, because these mechanisms are necessary to perform the various functions of the inlet assembly, they cannot simply be omitted.

Accordingly, it is desirable to continue providing the functionality of these actuators without having to enlarge the periphery of the inlet assembly to accommodate their presence. Furthermore, other desirable features and characteristics will become apparent from the subsequent summary and detailed description and the appended claims, taken in conjunction with the accompanying drawings and the foregoing technical field and background.

### BRIEF SUMMARY

An inlet arrangement for use with a propulsion system, a propulsion system for use with an aircraft, and an aircraft employing the propulsion system are disclosed herein.

In a first non-limiting embodiment, the inlet arrangement includes, but is not limited to, an actuator. The inlet arrangement further includes, but is not limited to, a linkage. The inlet arrangement still further includes, but is not limited to, an inlet assembly. The inlet assembly includes, but is not limited to, a lip that is configured to capture a captured freestream airflow. The inlet assembly further includes a cowl that extends in a downstream direction from the lip. The cowl defines an external surface of the inlet assembly. An inlet duct extends downstream from the lip. The inlet duct defines a pathway that is configured to guide the captured freestream airflow towards an engine of the propulsion system. The inlet duct is disposed radially inward of the cowl. The inlet assembly still further includes, but is not limited to, a movable component that is associated with one of the lip, the cowl, and the inlet duct. An outer surface of the inlet duct and an inner surface of the cowl define a gap therebetween. The linkage is disposed in the gap and is coupled with the moveable component. The linkage is configured to move within the gap and to move the moveable component when the linkage moves. The actuator is coupled with the linkage and moves the linkage when the actuator is actuated. The actuator is configured to be mounted at a location remote from the inlet assembly.

In another non-limiting embodiment, the propulsion system includes, but is not limited to, an engine that is configured to receive a captured freestream airflow. The propulsion system further includes, but is not limited to, an inlet arrangement coupled with the engine. The inlet arrangement includes an actuator, a linkage, and an inlet assembly. The inlet assembly includes a lip that is configured to capture the captured freestream airflow. The inlet assembly further includes a cowl extending in a downstream direction from the lip. The cowl defines an external surface of the inlet assembly. The inlet assembly further includes an inlet duct extending downstream from the lip. The inlet duct defines a pathway that is configured to guide the captured freestream airflow towards the engine. The inlet duct is disposed radially inward of the cowl. The inlet assembly further includes a movable component associated with one of the lip, the cowl, and the inlet duct. An outer surface of the inlet duct and an inner surface of the cowl define a gap therebetween. The linkage is disposed in the gap and coupled with the moveable component. The linkage is configured to move within the gap and to move the moveable component when the linkage moves. The actuator is coupled with the linkage and moves the linkage when the actuator is actuated. The actuator is mounted at a location remote from the inlet assembly.

In yet another embodiment, the aircraft includes, but is not limited to, an aircraft body. The aircraft further includes, but is not limited to, a coupling component. The aircraft still further includes, but is not limited, to a propulsion system coupled to the aircraft body by the coupling component. The propulsion system includes an engine configured to receive a captured freestream airflow and an inlet arrangement coupled with the engine. The inlet arrangement includes an actuator, a linkage, and an inlet assembly. The inlet assembly includes (1) a lip configured to capture the captured freestream airflow, (2) a cowl extending in a downstream direction from the lip, the cowl defining an external surface of the inlet assembly, (3) an inlet duct extending downstream from the lip, the inlet duct defining a pathway that is configured to guide the captured freestream airflow towards the engine, the inlet duct disposed radially inward of the cowl, and (4) a movable component associated with one of the lip, the cowl, and the inlet duct. An outer surface of the inlet duct and an inner surface of the cowl define a gap therebetween. The linkage is disposed in the gap and coupled with the moveable component. The linkage is configured to move within the gap and to move the moveable component when the linkage moves. The actuator is coupled with the linkage and moves the linkage when the actuator is actuated. The actuator is mounted at a location remote from the inlet assembly.

### BRIEF DESCRIPTION OF THE DRAWINGS

The present invention will hereinafter be described in conjunction with the following drawing figures, wherein like numerals denote like elements, and
FIG. 1 is a perspective view illustrating a non-limiting embodiment of an aircraft made in accordance with the teachings of the present disclosure;
FIG. 2 is a perspective view illustrating a non-limiting embodiment of a propulsion system made in accordance with the teachings of the present disclosure;
FIG. 3 is a perspective view illustrating the propulsion system of FIG. 2 with a lip of the inlet assembly disposed in a spaced-apart position;
FIG. 4 is a schematic cross-sectional view of the propulsion system illustrated in FIG. 2; and
FIG. 5 is a schematic cross-sectional view of the propulsion system illustrated in FIG. 4 with the lip of the inlet assembly disposed in the spaced-apart position.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

An improved inlet arrangement, an improved propulsion system employing the inlet arrangement, and an improved aircraft employing the propulsion system are disclosed herein. In a nonlimiting embodiment, the inlet arrangement includes an actuator, a linkage, and an inlet assembly. The actuator can be any suitable motor, machine, mechanism or other component that is configured to impart a force sufficient to move a movable component. The linkage can be any suitable member, structure, tether or other component that is configured to be moved by the force imparted by the actuator and further configured to transmit that force to the movable component.

In a non-limiting embodiment, the inlet assembly includes a lip (commonly referred to as a "cowl lip" by those of ordinary skill in the art). The lip is the leading edge of the inlet assembly and is configured to capture a portion of the oncoming airflow approaching the inlet assembly during flight and to direct the captured freestream airflow downstream through the inlet assembly. The inlet assembly further includes a cowl which extends in a downstream direction from the lip and which serves as the fairing or external surface of the inlet assembly. The inlet assembly further includes an inlet duct that defines an internal pathway through the inlet assembly. The inlet duct is disposed radially within the cowl and is arranged with respect to the cowl such that a gap is formed in the radial direction between the inlet duct and the cowl along at least a portion of their respective peripheries. The pathway formed by the inlet duct is configured to direct the captured freestream airflow from the lip to the aerodynamic interface plane of an engine of the propulsion system.

The inlet assembly further includes a movable component. In an example, the movable component may comprise a strut. The strut is associated with one of the lip, the cowl, and the inlet duct. For example, and without limitation, the strut may be coupled with the lip. In an example, the lip is configured to separate from, and to move longitudinally with respect to, the inlet duct and the cowl. In this example, the strut is configured to cause such longitudinal movement of the lip. Further, in this example, the strut and the linkage resides, at least partially, within the gap between the inlet duct and the cowl and the strut and the linkage are configured to move within the gap. Movement of the linkage may be longitudinal, lateral, circumferential, rotational, vibrational or any other type of movement that is effective to transmit the force to the strut. In this example, when the linkage moves, it will cause the strut to move. The actuator is coupled with the linkage and imparts the force to the linkage when the actuator is actuated. In an example, the actuator may comprise a servo motor that moves a lever arm when actuated. In this example, movement of the lever arm will cause the linkage to move. Movement of the linkage, in turn, will cause the strut to move. Movement of the strut, in turn, will cause the lip to move.

The actuator is mounted on the aircraft at a location that is remote from the inlet assembly. In conventional arrangements, the actuator is co-located with the moveable component and mounted to the inlet assembly within the gap between the inlet duct and the cowl. Conventionally, this arrangement requires the gap to be large enough to accommodate the actuator. Correspondingly, the periphery of the cowl had to be large enough to create a gap that was large enough to accommodate the actuator. Because the cowl is in direct contact with the freestream of air passing over and around the aircraft, the magnitude of the periphery of the cowl has an impact on the amount of drag generated by the propulsion system. By removing the actuator from the inlet assembly and mounting it at a remote location, the present invention reduces the magnitude of the periphery of the cowl. This reduction in cowl periphery has the effect of reducing the drag experienced by the aircraft as compared with an aircraft equipped with a conventional inlet arrangement that positions the actuator within the gap.

A greater understanding of the inlet assembly, a propulsion system employing the inlet assembly, and an aircraft employing the propulsion system may be obtained through a review of the illustrations accompanying this application together with a review of the detailed description that follows.

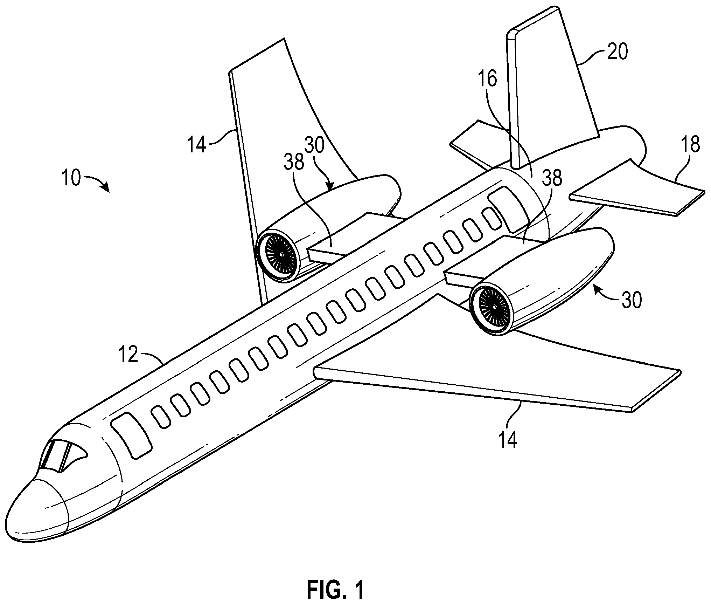

FIG. 1 is a perspective view illustrating a non-limiting embodiment of an aircraft 10 made in accordance with the teachings disclosed herein. In the illustrated embodiment, aircraft 10 comprises an aircraft that is capable of flying at speeds equal to, and/or greater than, the local speed of sound. It should be understood, however, that the teachings disclosed herein are not limited to use with an aircraft configured to fly at or above the local speed of sound. Rather, the teachings disclosed herein are also compatible with aircraft that are configured to operate in the sub-sonic flight regime.

Aircraft 10 includes a fuselage 12. In a non-limiting embodiment, fuselage 12 may be configured to carry/house crew, passengers, equipment, mechanisms, machinery, and/or cargo. Aircraft 10 further includes a pair of wings 14. Wings 14 are configured to generate lift to support the weight of aircraft 10 when aircraft 10 is in flight. Aircraft 10 further includes an empennage 16 comprising an aft portion of fuselage 12. Empennage 16 further includes a horizontal stabilizer 18 and a vertical stabilizer 20 for providing pitch and yaw inputs, respectively, when aircraft 10 is in flight.

With continuing reference to FIG. 1, FIGS. 2 and 3 are perspective views of propulsion system 30. As illustrated in FIG. 1, aircraft 10 includes two propulsion systems 30. In other embodiments, aircraft 10 may include a greater or lesser number of propulsion systems 30 without departing from the teachings of the present disclosure.

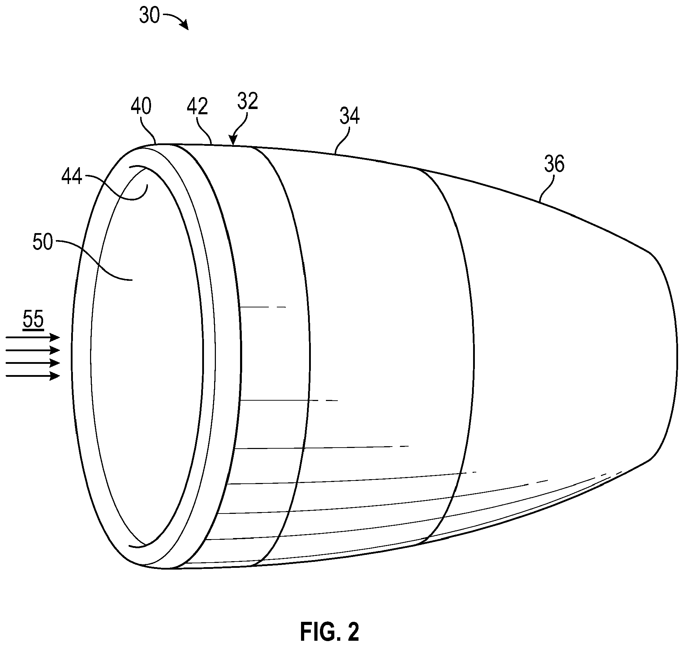

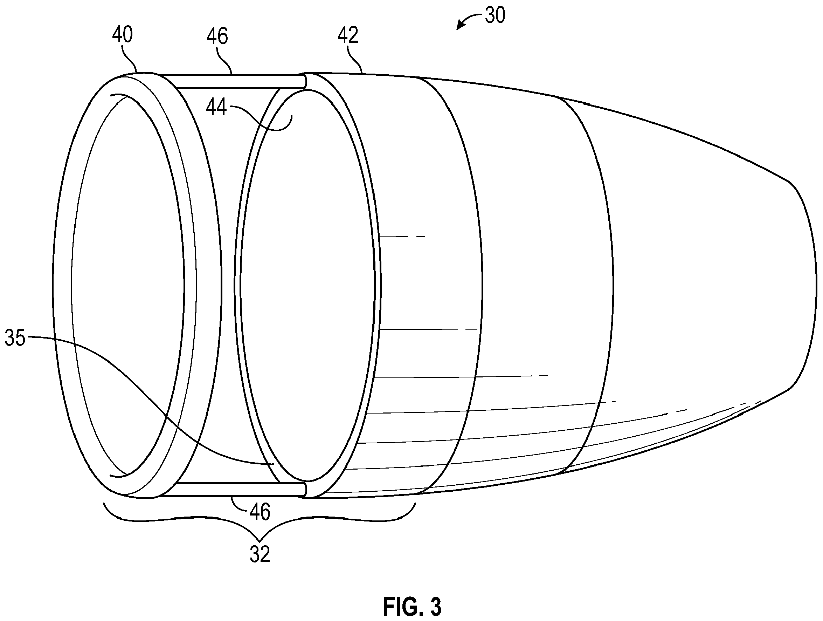

As best seen in FIGS. 2 and 3, propulsion system 30 comprises an inlet assembly 32, an engine portion 34, and a nozzle portion 36. Propulsion system 30 is configured to generate thrust when operating. The thrust is used to propel aircraft 10 in a forward direction when aircraft 10 is either in flight or taxiing on a ground surface. Freestream air 55 enters propulsion system 30 through inlet assembly 32. The freestream air is then energized to form a high-speed jet in engine portion 34. The high-speed jet is then discharged through nozzle portion 36. The discharge of the high-speed jet through nozzle portion 36 is what produces the thrust that propels aircraft 10 in a forward direction.

In the embodiment illustrated in FIG. 1, propulsion system 30 comprises a podded propulsion system that is mounted to fuselage 12 via a pylon 38. It should be understood that the teachings disclosed herein are not limited to use with podded propulsion systems that are mounted to a fuselage of an aircraft. In other embodiments, a podded propulsion system may be mounted to other locations on an aircraft including, but not limited to the wings, to the empennage, to the horizontal stabilizer, to the vertical stabilizer, or to any other suitable location on an aircraft. Further, it should be understood that the teachings of the present disclosure are not limited to use with podded propulsion systems. Rather, the teachings of the present disclosure are compatible with any other suitable mounting arrangement including, but not limited to, a partially or fully embedded arrangement whereby the propulsion system is partially or fully embedded into the wings, the fuselage or elsewhere on the aircraft.

In the illustrated embodiment, inlet assembly 32 has an axisymmetric configuration. It should be understood that the teachings of the present disclosure are not limited to use with axisymmetric configurations, but rather, are compatible with inlet assemblies having other configurations. For example, and without limitation, the teachings disclosed herein are compatible with inlet assemblies having a D-shaped configuration.

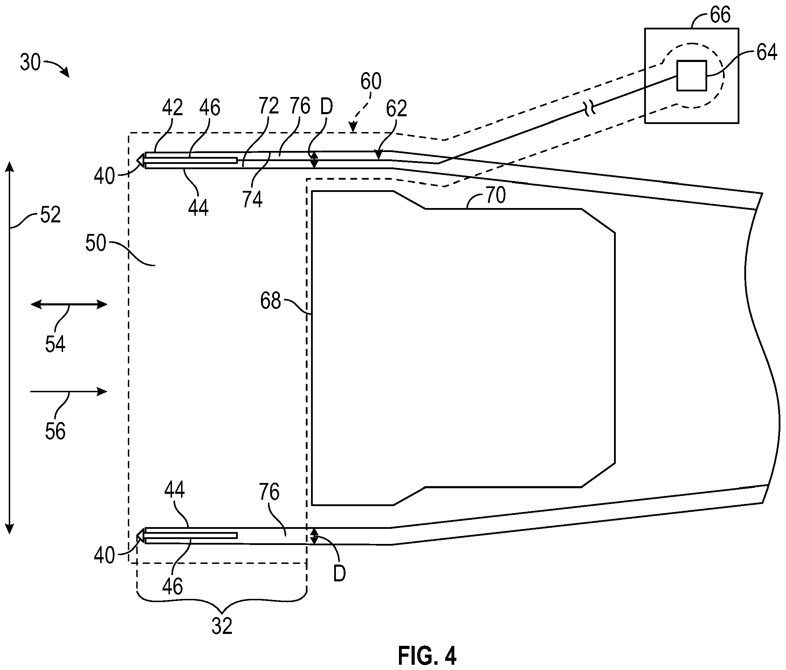

Inlet assembly 32 comprises a lip 40, a cowl 42, an inlet duct 44, and a pair of struts 46 (pair of struts 46 are best seen in FIG. 3). Lip 40 and struts 46 are configured to move with respect to cowl 42 and inlet duct 44. As illustrated in FIG. 2, lip 40 is in a position disposed immediately adjacent to cowl 42 and inlet duct 44. Inlet duct 44 defines an internal pathway 50 extending through inlet assembly 32 to the engine portion 34. Inlet duct 44 is disposed radially inward of cowl 42 and extends in both a circumferential and longitudinal direction. For avoidance of doubt, as illustrated in FIG. 4, arrow 52 indicates the radial direction, arrow 54 indicates the longitudinal direction, and arrow 56 indicates the downstream direction as those terms are used in this disclosure. Freestream air (i.e., ambient air) moving towards propulsion system 30 will encounter lip 40 first when it reaches propulsion system 30. The portion of the freestream air that aligns with, and that falls within a periphery of, lip 40 will be directed into inlet assembly 32 along pathway 50. The remaining portion of the freestream air approaching propulsion system 30 will spill around the outside of lip 40 and pass over cowl 42 as it continues downstream.

With continuing reference to FIGS 1 through 3, as best seen in FIG. 3, lip 40 is disposed in a position that is spaced apart from cowl 42. Lip 40 may be moved to this spaced apart position when it is desirable to draw air into propulsion system 30 over a leading edge of a lip 35 that is relatively blunt instead of drawing air over the relatively sharp leading edge of lip 40. At both the static condition and at low speeds, air will be drawn into propulsion system 30 from a stagnation point that is downstream of the propulsion system's leading edge. Accordingly, air that is drawn into propulsion system 30 at the static condition or at low speeds will first have to flow upstream for some distance along cowl 42 until it reaches the propulsion system's leading edge. Upon reaching the propulsion system's leading edge, the freestream of air will have to turn sharply around the leading edge and then flow downstream into the propulsion system along pathway 50. If the leading edge of the propulsion system is relatively sharp (i.e., if the leading edge has a relatively small radius of curvature), then the flow may separate from the surface of the leading edge as it attempts to make this nearly one hundred and eighty degree turn. Flow separation is undesirable. By presenting the incoming freestream air with a surface that is relatively blunt, the likelihood that the incoming freestream air will separate from the surface of the leading edge is greatly diminished.

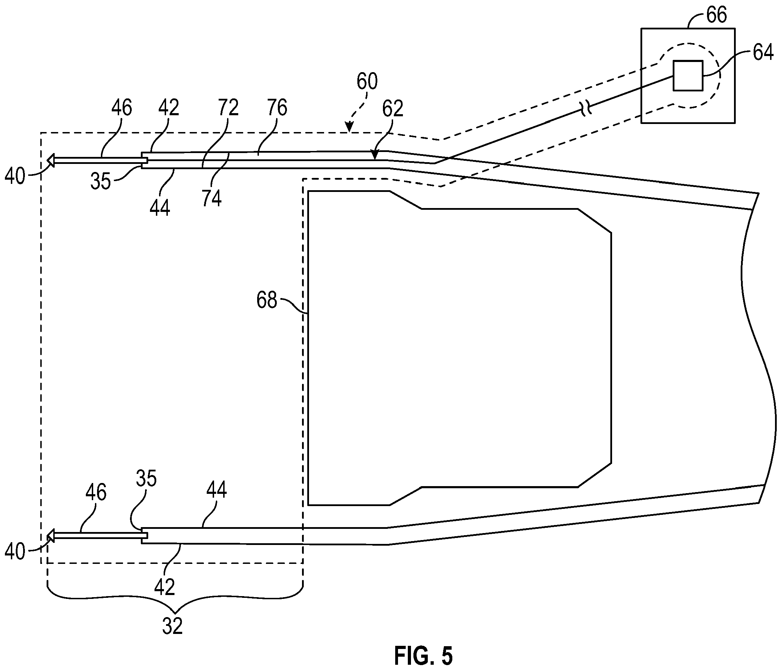

With continuing reference to FIGS. 1-3, FIGS. 4 and 5 are schematic cross-sectional views illustrating a nonlimiting embodiment of an inlet arrangement 60 made in accordance with the teachings disclosed herein. In FIG. 4, lip 40 is disposed adjacent to cowl 42 while in FIG. 5, lip 40 is spaced apart from cowl 42. In some embodiments, inlet arrangement 60 may be configured to move lip 40 back and forth between the adjacent position illustrated in FIG. 4 and the spaced apart position illustrated in FIG. 5. In other embodiments, inlet arrangement 60 may be configured to move lip 40 not only to the adjacent position illustrated in FIG. 4 and the spaced apart position illustrated in FIG. 5, but also to any suitable intermediate position therebetween without departing from the teachings of the present disclosure.

Inlet arrangement 60 includes inlet assembly 32, a linkage 62, and an actuator 64. Actuator 64 is mounted to a mounting position 66. Mounting position 66 may be any suitable location on aircraft 10 other than inlet assembly 32. For example, and without limitation, mounting position 66 may comprise a location elsewhere on propulsion system 30 such as engine portion 34 or nozzle portion 36. In another embodiment, mounting location 66 may comprise pylon 38 or any other structure, device, mechanism or component that is used to mount propulsion system 30 to any portion of aircraft 10. In yet another embodiment, mounting position 66 may comprise any portion of aircraft 10 other than propulsion system 30 and other than pylon 38.

As illustrated in FIGS. 4 and 5, pathway 50 comprises the three dimensional space defined by an inner surface of inlet duct 44. Pathway 50 is configured to receive and contain the freestream air that has been captured by lip 40 (the "captured freestream") or by lip 35 and to guide the captured freestream to an aerodynamic interface plane 68 of an engine 70.

An outer surface 72 of inlet duct 44 and an inner surface 74 of cowl 42 are spaced apart from one another by a distance D, thereby forming a gap 76. Gap 76 comprises the space disposed between outer surface 72 and inner surface 74. In the illustrated embodiment, which presents an axisymmetric inlet assembly, gap 76 is substantially constant around an entire circumference of inlet duct 44 and cowl 42. In other embodiments, gap 76 may vary around the periphery of the inlet assembly without departing from the teachings of the present disclosure.

In the illustrated embodiment, struts 46 are each disposed within gap 76. In other embodiments, struts 46 need not be disposed within gap 76, but rather, may be disposed at some other location on inlet assembly 32. In still other embodiments, inlet assembly may omit struts 46 altogether and a component other than struts 46 may comprise the movable component. For example, and without limitation, in another embodiment, linkage 62 may be coupled directly to lip 40, in which case, lip 40 would comprise the movable component as that term is used in the claims, below.

With respect to the embodiment illustrated in FIGS. 4 and 5, struts 46 are configured to move with respect to surface 72 and surface 74. In the illustrated embodiment, strut 46 is configured to move between a retracted position, as illustrated in FIG. 4, and a deployed position, as illustrated in FIG. 5. As struts 46 move between the retracted position and the deployed position, lip 40 is moved by struts 46 between the position adjacent to cowl 42 as illustrated in FIG. 4 and the position that is spaced apart from cowl 42 as illustrated in FIG. 5.

Also disposed within gap 76, and configured to move with respect thereto, is linkage 62. In the illustrated embodiment, linkage 62 is coupled with actuator 64 at one end and coupled with strut 46 at an opposite end. Configured in this manner, linkage 62 is configured to deliver force from actuator 64 to strut 46. In the illustrated embodiment, linkage 62 is a two-bar linkage with a single hinge. It should be understood that in other embodiments, any suitable configuration for linkage 62 that is effective to transmit force from actuator 64 to strut 46 may be used without departing from the teachings of the present disclosure.

Actuator 64 may comprise any suitable motor, mechanism, device, apparatus or component that is effective to exert a force when actuated. An initial actuation of actuator 64 in FIG. 4 will cause linkage 62 to move from a first position, as illustrated in FIG. 4 to a second position, as illustrated in FIG. 5. Movement of linkage 62 in this manner will cause a force to be exerted by linkage 62 in an upstream direction. This force will be transmitted to strut 46 and, in turn, will move strut 46 from the retracted position illustrated in FIG. 4 to the deployed position illustrated in FIG. 5. This, in turn, will result in movement of lip 40 from the adjacent position illustrated in FIG. 4 to the spaced apart position illustrated in FIG. 5. A second actuation of actuator 64 will reverse this sequence of events. The second actuation of actuator 64 will cause a force to be exerted in a downstream direction. This force will again be transmitted to strut 46 and, in turn will move strut 46 from the deployed position to the retracted position. This movement will, in turn, move lip 40 from the spaced-apart position to the adjacent position. Each subsequent actuation of actuator 64 will result in an alternating pattern of upstream and downstream forces being exerted on linkage 62.

Actuator 64 may be communicatively or operatively coupled with a processor such as a Full Authority Digital Electronic Controller (FADEC), or to a user input device, or a sensor, to some other component onboard aircraft 10 that is configured to provide an actuation input to actuator 64. Such components may be configured to provide an actuating input to actuator 64 when a predetermined condition occurs. For example, when the aircraft first begins to move from a static state, the FADEC may be configured to provide an actuating instruction to actuator 64 that causes actuator 64 to move lip 40 to the spaced-apart position. Further, when a predetermined speed is exceeded, the FADEC may be configured to send a second actuating instruction to actuator 64 that causes actuator 64 to move lip 40 to the adjacent position. Many additional conditions may also serve as triggering events that prompt the transmission of an actuating signal to actuator 64.

In a conventional inlet arrangement, gap 76 would need to be large enough to accommodate actuator 64. However, in the present invention, because actuator 64 is mounted in a location that is spaced apart from inlet assembly 32, gap 76 can be smaller than the smallest dimension of actuator 64. In some embodiments, gap 76 may be only marginally larger than a smallest dimension of linkage 62 or strut 46, whichever is larger. This will minimize the magnitude of gap 76 while still permitting movement of linkage 62 and strut 46. In either event, by removing actuator 64 from inlet assembly 32, inlet assembly 32 is permitted to have a smaller overall cross-sectional dimension than it would otherwise have if actuator assembly 64 were mounted to inlet assembly 32. Configured in this manner, propulsion system 30 will generate a smaller amount of drag than would a conventional propulsion system.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the disclosure as set forth in the appended claims.

The present disclosure may be further described by the following Aspects.
**Aspect 1**. An inlet arrangement for a propulsion system, the propulsion system configured to be coupled with an aircraft via a coupling component, the inlet arrangement comprising:
   an actuator;
   a linkage; and
   an inlet assembly, the inlet assembly including:
      a lip configured to capture a captured freestream airflow,
      a cowl extending in a downstream direction from the lip, the cowl defining an external surface of the inlet assembly,
      an inlet duct extending downstream from the lip, the inlet duct defining a pathway, the pathway configured to guide the captured freestream airflow towards an engine of the propulsion system, the inlet duct disposed radially inward of the cowl, and
      a movable component associated with one of the lip, the cowl, and the inlet duct,
      wherein an outer surface of the inlet duct and an inner surface of the cowl define a gap therebetween,
      wherein the linkage is disposed in the gap and coupled with the moveable component,
      wherein the linkage is configured to move within the gap and to move the moveable component when the linkage moves,
      wherein the actuator is coupled with the linkage and moves the linkage when the actuator is actuated, and
      wherein the actuator is configured to be mounted at a location remote from the inlet assembly.
**Aspect 2.** The inlet arrangement of Aspect 1, wherein the linkage is configured to move between a first position and a second position within the space, wherein the actuator is configured to move the linkage between the first position and the second position, and wherein the movable component is configured to move between a retracted position and a deployed position when the linkage moves between the first position and the second position.
**Aspect 3.** The inlet arrangement of Aspects 1 or 2, wherein the actuator is configured to be mounted within the coupling component.
**Aspect 4.** The inlet arrangement of Aspect 3, wherein the coupling component comprises a pylon.
**Aspect 5.** The inlet arrangement of any one of Aspects 1-4, wherein the actuator is configured to be mounted to the aircraft.
**Aspect 6.** The inlet arrangement of any one of Aspects 1-5, wherein the movable component comprises a strut and wherein the strut is coupled with the lip.
**Aspect 7.** The inlet arrangement of any one of Aspects 1-6, wherein a radial distance between the inner surface of the cowl and the outer surface of the inlet duct is larger than a smallest dimension of the linkage and smaller than a smallest dimension of the actuator.
**Aspect 8.** The inlet arrangement of any one of Aspects 1-7, wherein the movable component comprises a strut, wherein the actuator is configured to be mounted to one of the coupling component and the aircraft, wherein the linkage is configured to move between a first position and a second position within the gap, wherein the actuator is configured to move the linkage between the first position and the second position, and wherein the movable component is configured to move between an retracted position and a deployed position when the linkage moves between the first position and the second position.
**Aspect 9.** A propulsion system configured to be coupled with an aircraft via a coupling component, the propulsion system comprising:
   an engine configured to receive a captured freestream airflow; and
   an inlet arrangement coupled with the engine, the inlet arrangement including an actuator, a linkage, and an inlet assembly, the inlet assembly including:
      a lip configured to capture the captured freestream airflow,
      a cowl extending in a downstream direction from the lip, the cowl defining an external surface of the inlet assembly,
      an inlet duct extending downstream from the lip, the inlet duct defining a pathway configured to guide the captured freestream airflow towards the engine, the inlet duct disposed radially inward of the cowl, and
      a movable component associated with one of the lip, the cowl, and the inlet duct,
      wherein an outer surface of the inlet duct and an inner surface of the cowl define a gap therebetween,
      wherein the linkage is disposed in the gap and coupled with the moveable component,
      wherein the linkage is configured to move within the gap and to move the moveable component when the linkage moves,
      wherein the actuator is coupled with the linkage and moves the linkage when the actuator is actuated, and
      wherein the actuator is mounted at a location remote from the inlet assembly.
**Aspect 10.** The propulsion system of Aspect 9, wherein the linkage is configured to move between a first position and a second position within the space, wherein the actuator is configured to move the linkage between the first position and the second position, and wherein the movable component is configured to move between a retracted position and a deployed position when the linkage moves between the first position and the second position.
**Aspect 11.** The propulsion system of Aspects 9 or 10, wherein the actuator is configured to be mounted within the coupling component.
**Aspect 12.** The propulsion system of Aspect 11, wherein the coupling component comprises a pylon.
**Aspect 13.** The propulsion system of any one of Aspects 9-12, wherein the actuator is configured to be mounted to the aircraft.
**Aspect 14.** The propulsion system of any one of Aspects 9-13, wherein the movable component comprises a strut and wherein the strut is coupled with the lip.
**Aspect 15.** The propulsion system of any one of Aspects 9-14, wherein the radial distance between the inner surface of the cowl and the outer surface of the inlet duct is larger than a smallest dimension of the linkage and smaller than a smallest dimension of the actuator.
**Aspect 16.** An aircraft comprising:
   an aircraft body;
   a coupling component; and
   a propulsion system coupled to the aircraft body by the coupling component,
      wherein the propulsion system includes an engine configured to receive a captured freestream airflow and an inlet arrangement coupled with the engine,
      wherein the inlet arrangement includes an actuator, a linkage, and an inlet assembly, and
         wherein the inlet assembly includes (1) a lip configured to capture the captured freestream airflow, (2) a cowl extending in a downstream direction from the lip, the cowl defining an external surface of the inlet assembly, (3) a inlet duct extending downstream from the lip, the inlet duct defining a pathway configured to guide the captured freestream airflow towards the engine, the inlet duct disposed radially inward of the cowl, and (4) a movable component associated with one of the lip, the cowl, and the inlet duct,
   wherein an outer surface of the inlet duct and an inner surface of the cowl define a gap therebetween,
   wherein the linkage is disposed in the gap and coupled with the moveable component,
   wherein the linkage is configured to move within the gap and to move the moveable component when the linkage moves,
   wherein the actuator is coupled with the linkage and moves the linkage when the actuator is actuated, and
   wherein the actuator is mounted at a location remote from the inlet assembly.
**Aspect 17.** The aircraft of Aspect 16, wherein the linkage is configured to move between a first position and a second position within the gap, wherein the actuator is configured to move the linkage between the first position and the second position, and wherein the movable component is configured to move between a retracted position and a deployed position when the linkage moves between the first position and the second position.
**Aspect 18.** The aircraft of Aspects 16 or 17, wherein the actuator is configured to be mounted within the coupling component.
**Aspect 19.** The aircraft of Aspect 18, wherein the coupling component comprises a pylon.
**Aspect 20.** The aircraft of any one of Aspects 16-19, wherein the actuator is configured to be mounted to the aircraft body.

## Claims

1. An inlet arrangement for a propulsion system, the propulsion system configured to be coupled with an aircraft via a coupling component, the inlet arrangement comprising:
an actuator;
a linkage; and
an inlet assembly, the inlet assembly including:
a lip configured to capture a captured freestream airflow,
a cowl extending in a downstream direction from the lip, the cowl defining an external surface of the inlet assembly,
an inlet duct extending downstream from the lip, the inlet duct defining a pathway, the pathway configured to guide the captured freestream airflow towards an engine of the propulsion system, the inlet duct disposed radially inward of the cowl, and
a movable component associated with one of the lip, the cowl, and the inlet duct,
wherein an outer surface of the inlet duct and an inner surface of the cowl define a gap therebetween,
wherein the linkage is disposed in the gap and coupled with the moveable component,
wherein the linkage is configured to move within the gap and to move the moveable component when the linkage moves,
wherein the actuator is coupled with the linkage and moves the linkage when the actuator is actuated, and
wherein the actuator is configured to be mounted at a location remote from the inlet assembly.

2. The inlet arrangement of claim 1, wherein the linkage is configured to move between a first position and a second position within the space, wherein the actuator is configured to move the linkage between the first position and the second position, and wherein the movable component is configured to move between a retracted position and a deployed position when the linkage moves between the first position and the second position.

3. The inlet arrangement of claims 1 or 2, wherein the actuator is configured to be mounted within the coupling component.

4. The inlet arrangement of claim 3, wherein the coupling component comprises a pylon.

5. The inlet arrangement of any one of claims 1-4, wherein the actuator is configured to be mounted to the aircraft.

6. The inlet arrangement of any one of claims 1-5, wherein the movable component comprises a strut and wherein the strut is coupled with the lip.

7. The inlet arrangement of any one of claims 1-6, wherein a radial distance between the inner surface of the cowl and the outer surface of the inlet duct is larger than a smallest dimension of the linkage and smaller than a smallest dimension of the actuator.

8. The inlet arrangement of any one of claims 1-7, wherein the movable component comprises a strut, wherein the actuator is configured to be mounted to one of the coupling component and the aircraft, wherein the linkage is configured to move between a first position and a second position within the gap, wherein the actuator is configured to move the linkage between the first position and the second position, and wherein the movable component is configured to move between an retracted position and a deployed position when the linkage moves between the first position and the second position.

9. A propulsion system configured to be coupled with an aircraft via a coupling component, the propulsion system comprising:
an engine configured to receive a captured freestream airflow; and
an inlet arrangement according to any one of claims 1-8 coupled with the engine.

10. An aircraft comprising:
an aircraft body;
a coupling component; and
a propulsion system according to claim 9 coupled to the aircraft body by the coupling component.
